# EUROPÄISCHE PATENTSCHRIFT

(11) **EP 3 884 229 B1**
(45) Veröffentlichungstag und Bekanntmachung des Hinweises auf die Patenterteilung: **02.08.2023**
(21) Anmeldenummer: 19794951.4
(22) Anmeldetag: 23.10.2019
(51) Int. Cl.: F25D 23/06

(54) **KÄLTEGERÄT MIT LEITUNGSDURCHFÜHRUNG**
REFRIGERATION APPLIANCE HAVING CABLE BUSHING
APPAREIL FRIGORIFIQUE PRÉSENTANT UNE CONDUITE TRAVERSANTE

(30) Priorität: 19.11.2018 DE 102018219746
(43) Veröffentlichungstag der Anmeldung: 29.09.2021
(73) Patentinhaber: BSH Hausgeräte GmbH, 81739 München (DE)
(72) Erfinder: ZHANG, Ming, 89075 Ulm (DE); VOGL, Andreas, 89437 Haunsheim (DE); PFLOMM, Berthold, 89077 Ulm (DE); FLINNER, Klaus, 89447 Zöschingen (DE)
(86) Internationale Anmeldenummer: PCT/EP2019/078822
(87) Internationale Veröffentlichungsnummer: WO 2020/104132

(56) Entgegenhaltungen:
- EP-A1- 2 543 943
- DE-A1- 1 751 797
- DE-U- 1 997 740
- DE-U1- 8 809 542
- ES-A1- 2 590 557
- FR-A- 1 597 346
- JP-U- S5 210 664
- JP-U- S5 267 680
- US-A- 5 000 010

## Beschreibung

Die vorliegende Erfindung betrifft ein Kältegerät, insbesondere ein Haushaltskältegerät, bei dem ein Kühlraum durch eine Wand, typischerweise eine Innenbehälterwand, von einer umgebenden Wärmedämmschicht getrennt ist und eine Leitung durch eine Öffnung der Wand verläuft. Die Wärmedämmschicht wird herkömmlicherweise erzeugt, indem ein Kunstharz in einen Hohlraum an der vom Kühlraum abgewandten Seite der Wand eingespritzt und darin expandieren gelassen wird. Wenn dabei die Öffnung, durch die die Leitung verläuft, nicht ausreichend abgedichtet ist, kann über diese Öffnung der expandierende Schaumstoff in den Kühlraum vordringen. Wenn dies geschieht, muss das betroffene Gerät regelmäßig verworfen werden, da eine spurlose Beseitigung des eingedrungenen Schaumstoffs nicht möglich ist. Überdies besteht bei unzureichender Abdichtung der Öffnung die Gefahr, dass Feuchtigkeit aus dem Kühlraum in die Wärmedämmschicht eindringt und deren Dämmwirkung beeinträchtigt.

Eine bekannte Technik zum Abdichten einer solchen Öffnung sind das Umwickeln eines an der Wand um die Öffnung herum geformten Rohrstutzens und der Leitung mit einem Klebeband. Diese Technik erfordert ein hohes Maß an Handarbeit, und die Dichtigkeit gegen Feuchtigkeit ist schwierig sicherzustellen. Anstelle des Klebebands kann auch ein Butylpad verwendet werden; allerdings ist für dessen Vulkanisierung am Einbauort ein weiterer zeitaufwendiger Arbeitsschritt erforderlich.

Die Dokumente JP S52 67680 U und EP 2 543 943 A1 offenbaren Kältegeräte mit einer Leitungsdurchführung.

Die DE 10 2014 212 411 A1 offenbart ein Kältegerät gemäß dem Oberbegriff des Patentanspruchs 1.

Aufgabe der Erfindung ist, eine Technik zu schaffen, die eine zuverlässige Abdichtung der Öffnung mit minimalem Zeitaufwand ermöglicht.

Die Aufgabe wird erfindungsgemäß mit einem Kältegerät gemäß Anspruch 1 gelöst.

Um zu verhindern, dass sich die Hülse während des Zusammenbaus von der Wand löst, insbesondere falls das Kältemittelrohr durch die bereits an der Wand montierte Hülse geschoben werden muss, kann die Hülse an dem Rohrstutzen formschlüssig und/oder durch Klebung befestigt sein.

Insbesondere falls die Hülse erst nachträglich auf das bereits montierte Kältemittelrohr und den Rohrstutzen aufgeschoben wird, kann ein Reibschluss zwischen Hülse und Rohrstutzen ausreichend sein.

Um sicherzustellen, dass die Hülse vor dem Ausschäumen fest mit der Wand verbunden ist, kann der erste Endabschnitt durch den Rohrstutzen elastisch aufgeweitet sein.

Die formschlüssige Verankerung kann durch einen in radialer Richtung der Öffnung nach außen oder nach innen vorspringenden Wulst des Rohrstutzens oder des ersten Endabschnitts vermittelt sein, der von einer Nut des jeweils anderen Bauteils aufgenommen ist.

Einer bevorzugten Ausgestaltung zufolge genügt es, wenn dieser formschlüssige Sitz entlang der Leitung nur in einer Richtung wirksam ist. Zu diesem Zweck kann der Rohrstutzen sich an einer von der Wärmedämmschicht abgewandten Seite der Wand erstrecken, und der erste Endabschnitt kann eine Nut aufweist, die wenigstens ein von der Wand abgewandtes Ende des Rohrstutzens aufnimmt. So ist es möglich, von der Seite des Kühlraums her zunächst die Hülse in die Öffnung einzuschieben über das freie Ende des Rohrstutzens zu stülpen, und dann von derselben Seite her die Leitung durch die Öffnung zu schieben. Dabei auf die Hülse ausgeübter Zug verstärkt allenfalls den Eingriff des Rohrstutzens in die Nut, kann aber nicht zu Undichtigkeit führen.

Damit der Rohrstutzen im Innern des Kühlraums nicht die Anbringung anderer Komponenten behindert, kann er am Boden einer in die Wärmedämmschicht vorspringenden Ausstülpung der Wand geformt sein.

Um einen dichten Anschluss der Hülse an die Leitung zu gewährleisten, sollte der zweite Endabschnitt der Hülse durch die darin eingeschobene Leitung elastisch aufgeweitet sein.

Der zweite Endabschnitt kann als Rohrabschnitt mit in Längsrichtung der Hülse gleichbleibenden Durchmesser geformt sein; so ist ein wirksam dichtender Kontakt mit der Leitung auf der gesamten Länge des zweiten Endabschnitts gewährleistet.

Um das Einführen des Kältemittelrohrs in die Hülse zu erleichtern, kann es hilfreich sein, wenn nicht die gesamte Innenfläche des Rohrabschnitts an der Rohrleitung anliegt. Deswegen kann der zweite Endabschnitt vorteilhafterweise wenigstens einen von einer Innenfläche des Rohrabschnitts abstehenden Vorsprung aufweisen. Der Vorsprung erstreckt sich vorzugsweise über den gesamten Umfang der Innenfläche.

Um die Biegsamkeit der Hülse zu verbessern, weist sie einen gewellten Zwischenabschnitt auf, in dem Bereiche mit großem Querschnitt und Bereiche mit kleinem Querschnitt miteinander abwechseln.

Die Bereiche mit kleinem Querschnitt haben vorzugsweise einen Innendurchmesser, der größer ist als der Außendurchmesser der Leitung, damit die Leitung beim Einschieben in die Hülse diese Bereiche ungehindert passieren kann.

Die Bereiche mit abwechselnd großen und kleinen Durchmessern sind relativ aufwendig zu formen. Um die Fertigung der Hülse zu vereinfachen, können im Zwischenabschnitt Bereiche mit zum zweiten Endabschnitt hin stufenweise abnehmenden Querschnitten gebildet sein.

Wenn die Hülse im Kältegerät eingebaut ist, können eine Längsachse des ersten Endabschnitts und eine Längsachse des zweiten Abschnitts um wenigstens 45° voneinander abweichende Richtungen aufweisen.

Bei der Leitung kann es sich insbesondere um eine Kältemittelleitung, etwa zur Versorgung eines in dem Kühlraum angeordneten Verdampfers, handeln.

Die Hülse ist vorzugsweise nach dem Einbau in die Wärmedämmschicht des Kältegeräts eingebettet.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
Fig. 1 ein Detail eines Kältegeräts mit einer Kältemittelleitungsdurchführung im Schnitt;
Fig. 2 eine Öffnung einer Innenbehälterwand eines erfindungsgemäßen Kaltegeräts mit einer daran platzierten Hülse;
Fig. 3 eine Öffnung einer Innenbehälterwand mit einer auf einen die Öffnung umgebenden Rohrstutzen aufgesteckten Hülse gemäß einer zweiten Ausgestaltung der Erfindung;
Fig. 4 einen axialen Schnitt durch eine Hülse gemäß einer dritten, nicht beanspruchten Ausgestaltung;
Fig. 5 einen axialen Schnitt durch eine Hülse gemäß einer vierten, nicht beanspruchten Ausgestaltung;
Fig. 6 einen axialen Schnitt durch eine Hülse gemäß einer fünften, nicht beanspruchten Ausgestaltung;
Fig. 7 einen axialen Schnitt durch eine Hülse gemäß einer sechsten, nicht beanspruchten Ausgestaltung;
Fig. 8 einen axialen Schnitt durch eine Hülse gemäß einer siebten, nicht beanspruchten Ausgestaltung;
Fig. 9 einen axialen Schnitt durch eine Hülse gemäß einer achten Ausgestaltung der Erfindung; und
Fig. 10 eine mit den vorbeschriebenen Ausgestaltungen kombinierbare Weiterbildung.

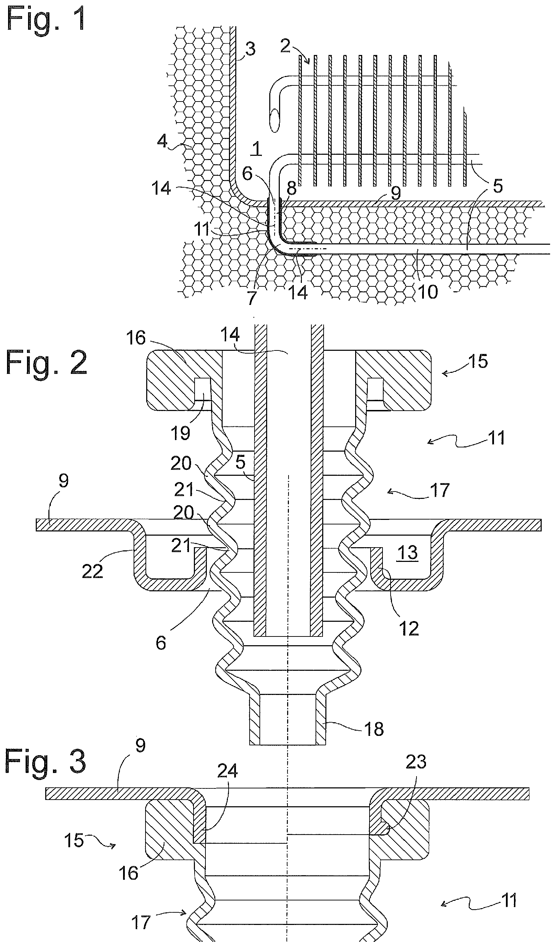

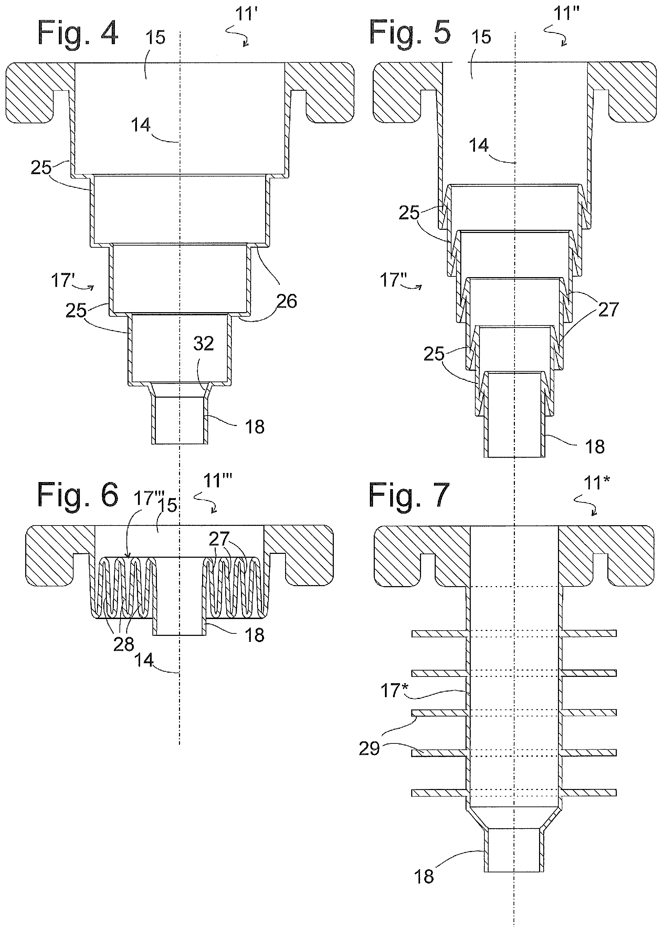

Fig. 1 zeigt ein typisches Anwendungsbeispiel der Erfindung. Die Schnittebene der Fig. 4 verläuft horizontal durch einen Teil eines Kühlraums 1 eines Haushaltskältegerät, einen darin angeordneten Verdampfer 2, hier ein Lamellenverdampfer, einen den Kühlraum 1 begrenzenden Innenbehälter 3 und eine außenseitig an den Innenbehälter 3 anschließende Wärmedämmschicht 4 aus expandiertem Kunststoff. Eine Kältemittelleitung 5 zur Versorgung des Verdampfers 2 verläuft auf einem Teil ihrer Länge in der Wärmedämmschicht 4 und auf einem anderen Teil in dem Kühlraum 1. Dazwischen passiert sie eine Öffnung 6 des Innenbehälters 3. Diese Öffnung 6 muss während des Zusammenbaus des Geräts sogfältig abgedichtet werden, um sicherzustellen, dass während des Aufschäumens der Wärmedämmschicht kein Dämmschaumstoff durch die Öffnung 6 in den Kühlraum 1 gelangen und während des Betriebs des Kältegeräts keine Feuchtigkeit aus dem Kühlraum in die Wärmedämmschicht 4 vordringen kann.

Das Abdichten der Öffnung 6 wirft insbesondere dann Probleme auf, wenn die Kältemittelleitung 5 in der Nähe der Öffnung 6 in der Wärmedämmschicht 4 zu einem Bogen 7 geformt ist. Ein solcher Bogen 7, der sich über einen Winkel von ca. 90° erstreckt, wird häufig benötigt, um einen Übergang zu bilden zwischen einem Leitungsabschnitt 8, der eine Wand 9, typischerweise eine Rückwand, des Innenbehälters 3 in rechtem Winkel kreuzt, und einem Leitungsabschnitt 10, der in der Wärmedämmschicht 4 parallel zu der Wand 9 und in möglichst geringem Abstand von dieser verläuft. Eine dichtende Hülse 11, die zwischen den Rändern der Öffnung 6 und der die Öffnung kreuzenden Kältemittelleitung 5 angeordnet ist, um Dämmschaumstoff aus der Schicht 4 vom Kühlraum 1 fernzuhalten, ist schematisch dargestellt; Längsachsen 14 ihrer beiden Endabschnitte, die bei im entspannten Zustand der Hülse 11 zusammenfallen, sind durch die Kältemittelleitung 5 in eine um ca 90° gegeneinander verdrehte Konfiguration gezwungen.

Fig. 2 zeigt ein Stück der Wand 9 mit der darin geformten Öffnung 6 und die Hülse 11 gemäß einer ersten Ausgestaltung der Erfindung in teilweise in die Öffnung 6 eingeschobenem Zustand.

Die Öffnung 6 ist hier von einem in Richtung des Kühlraums 1 vorspringenden Rohrstutzen 12 umgeben. Der Rohrstutzen 12 kann z.B. erhalten sein, indem die bis zum plastisch verformbaren Zustand erwärmte Wand 9 mit einem Dorn durchstoßen wird, um die Öffnung 6 zu bilden.

Der Rohrstutzen 12 könnte aus der Ebene der Wand 9 heraus in den Kühlraum 1 hinein vorspringen; im hier gezeigten Fall ist er am Boden einer Vertiefung 13 der Wand 9 geformt, so dass er nicht über die umgebende Wand 9 hinaus in den Kühlraum 1 hineinragt, sondern eine Rinne sich rings um den Rohrstutzen 12 erstreckt.

Die in Fig. 2 entlang ihrer Längsachse 14 geschnitten dargestellte Hülse 11 ist ein einteiliger, vorzugsweise durch Spritzguss gefertigter Formkörper aus gummielastischem Material. Ein erster Endabschnitt 15 der Hülse 11 umfasst einen sich ringförmig um die Längsachse 14 erstreckenden Flansch 16, an dessen einem Mittelabschnitt 17 und einem zweiten Endabschnitt 18 der Hülse 11 zugewandter Seite eine umlaufende Nut 19 ausgespart ist. Der Flansch 16 und die Nut 19 sind so bemessen, dass wenn der Flansch 16 in die Vertiefung 13 hineingedrückt wird, der Rohrstutzen 12 in die Nut 18 eingreift. Vorzugsweise sind die Formen der Vertiefung 13 und des Flansches 16 so aneinander angepasst, dass der Flansch 16 in fertig montierter Stellung die Vertiefung 13 exakt ausfüllt und seine von zweiten Endabschnitt 18 abgewandte Seite mit der Oberfläche der Wand 9 bündig ist. Insbesondere können Außenwände 22 der Vertiefung 13 wie in der Fig. 1 gezeigt parallel zur Längsachse 14 des Rohrstutzens 12 oder hinterschnitten sein, um eine Fixierung des Flansches 16 in der Vertiefung 13 auch durch Reibschluss oder Formschluss zwischen einer Umfangsfläche des Flansches 16 und den Außenwänden 22 zu ermöglichen.

Der Mittelabschnitt 17 der Hülse 11 hat die Form eines Wellschlauchs, in dem Bereiche mit großem Querschnitt 20 und Bereiche mit kleinem Querschnitt 21 miteinander abwechseln. Die Durchmesser der Bereiche 20 und die Durchmesser der Bereiche 21 nehmen jeweils zum zweiten Endabschnitt 18 hin allmählich ab. Diese Maßnahme erleichtert das Entformen der Hülse 11 aus einem Spritzgießwerkzeug, insbesondere das Herausziehen eines zum Formen der Innenseite der Hülse 11 verwendeten Dorns.

Der zweite Endabschnitt 18 hat die Form eines Rohrstücks mit gleichbleibendem Durchmesser. Dieser Durchmesser ist geringfügig kleiner als der der in die Hülse 11 einzuschiebenden Kältemittelleitung 5, so dass, wenn die Kältemittelleitung 5 durch die Hülse 11 verläuft, der zweite Endabschnitt 18 dicht an ihr anliegt.

Beim Einschieben der Kältemittelleitung 5 von Seiten des Kühlraums 1 her ist die Hülse 11 am Rohrstutzen 12 formschlüssig gehalten; eine Zugkraft, die beim Vorschieben der Kältemittelleitung 5 auf die Hülse 11 einwirkt, hält den Flansch 16 gegen den Boden der Rinne 13 gedrückt.

Die Reibung zwischen der Kältemittelleitung 5 und dem zweiten Endabschnitt 18 sorgt dafür, dass die Hülse 11 nach dem Einschieben der Kältemittelleitung unter einer Zugspannung steht, die den Flansch 16 gegen den Boden der Rinne 13 beaufschlagt und so dazu beiträgt, dass der Flansch 16 in der Rinne 13 unbeweglich bleibt, auch wenn er beim Ausschäumen einem Überdruck des expandierenden Dämmschaumstoffs ausgesetzt ist.

Der Mittelabschnitt 17 ist infolge der Wellenform leicht zu dehnen und kann sich daher auch problemlos der Form des Bogens 7 anpassen, ohne dass in der Hülse 11 Spannungskräfte auftreten, die den Flansch 16 aus der Rinne 13 wieder heraustreiben. Die Reibung zwischen dem Flansch 16 und dem Rohrstutzen 12 sowie einer Außenwand 22 der Rinne 13 genügt, um den Flansch 16 auch in dieser Stellung in der Rinne 13 festzuhalten und die Öffnung 6 schaumdicht zu halten.

Fig. 3 zeigt eine Hülse 11, montiert an einem Rohrstutzen 24 der Wand 9, gemäß einer zweiten Ausgestaltung der Erfindung. Im Gegensatz zum Rohrstutzen 12 der Fig. 1 springt der Rohrstutzen 24 von der vom Kühlraum abgewandten Seite der Wand 9 vor. Der erste Endabschnitt 15 der Hülse umfasst auch hier einen Flansch 16, der über den Rohrstutzen 24 gestülpt wird. Die übrigen Abschnitte 17, 18 gleichen den in Fig. 2 gezeigten und sind daher nicht noch einmal vollständig gezeigt. Um sicher sitzenzubleiben, wenn die Kältemittelleitung durch die Öffnung 6 und die Hülse 11 geschoben wird, ist der Flansch 16 an der Außenseite des Rohrstutzens 24 und/oder der schaumseitigen Oberfläche der Wand 9 verklebt. Wie im Fall der Fig. 2 unterstützt der wellenförmige Verlauf des Mittelabschnitts 17 eine Biegung der Hülse 11, wenn der Bogen 7 des Kältemittelrohrs 5 in sie einrückt.

Um die Neigung des Flansches 16, sich von dem Rohrstutzen 24 zu lösen, wenn die Hülse 11 unter Zug- oder Biegespannung steht, weiter zu reduzieren, kann ein Formschluss zwischen dem Flansch 16 und dem Rohrstutzen 24 vorgesehen werden. Zu diesem Zweck kann, wie in der rechten Hälfte von Fig. 3 gezeigt, ein radial vorspringender Wulst 23 am Rohrstutzen 24 geformt sein, z.B. indem der durch Durchstoßen der Wand 9 frisch geformte Rohrstutzen 24 im noch weichen Zustand wieder gestaucht wird, und eine den Wulst 22 aufnehmende Nut ist am Flansch 16 ausgespart.

Eine entsprechende Paarung einer Nut und einer darin eingreifenden Rippe kann auch im Falle der Fig. 2 am Rohrstutzen 12 und/oder der Außenwand 22 und der diesen jeweils gegenüberliegenden Oberfläche des Flansches 16 vorgesehen sein, um die Fähigkeit des Flansches 16 zu verbessern, einem Überdruck des Dämmschaumstoffs zu widerstehen, ohne sich aus der Rinne 13 herauszubewegen.

Während die Hülse der Fig. 2 entweder zuerst auf die Kältemittelleitung 5 oder den Rohrstutzen 12 aufgeschoben werden muss, bevor die Kältemittelleitung 5 oder ein mit ihr verbundener Verdampfer am Innenbehälter 3 montiert werden kann, kann die Hülse 11 der Fig.3 auch nach der Montage der Kältemittelleitung 5 am Innenbehälter 3 auf letztere aufgeschoben werden, bis ihr erster Endabschnitt 15 den Rohrstutzen 24 erreicht. In diesem Fall kann ein einfacher Reibschluss zwischen dem ersten Endabschnitt 15 und dem Rohrstutzen 24 genügen, um den Endabschnitt 15 bis zum Ausschäumen sicher am Rohrstutzen 24 zu fixieren.

Die Fig. 4 bis 9 zeigen Hülsen mit unterschiedlich abgewandelten Mittelabschnitten. Die ersten Endabschnitte 15 dieser Hülsen sind zwar sämtlich von in Fig. 2 gezeigten Typ, doch versteht sich, dass sie auch mit einem ersten Endabschnitt vom in Fig. 3 gezeigten Typ kombiniert werden können.

Bei der Hülse 11' der Fig. 4 setzt sich der Mittelabschnitt 17' aus einer Abfolge von zylindrischen Bereichen 25 zusammen, deren Durchmesser vom ersten Endabschnitt 15 zum zweiten 18 schrittweise abnimmt, und die untereinander durch zur Längsachse 14 senkrechte ringförmige Wände 26 verbunden sind. Auch diese Hülse 11' kann durch das Einschieben des Kältemittelrohrs 5 unter Zugspannung gesetzt werden; ihre Dehnbarkeit kommt im Wesentlichen dadurch zustande, dass die ringförmigen Wände 26 unter der Einwirkung einer Zugspannung eine Kegelstumpfform annehmen, und ist daher bei gleicher Länge und Wandstärke im Allgemeinen geringer als die der Hülse 11 mit gewelltem Mittelabschnitt 17 gemäß Fig. 2. Der Vorteil der Hülse 11' liegt darin, dass ihr Inneres frei von Hinterschneidungen ist und sie deshalb einfacher zu fertigen ist als die Hülse 11.

Um das Einführen des Kältemittelrohrs 5 in den zweiten Endabschnitt 18 zu erleichtern, kann zwischen diesem und dem Mittelabschnitt 17' ein kegelstumpfförmiger Übergang 32 geformt sein.

Die Hülse 11" der Fig. 5 hat einen Mittelabschnitt 17", in dem sich zylindrische Bereiche 25 mit zum zweiten Endabschnitt 18 hin schrittweise abnehmendem Durchmesser mit kegelstumpfförmigen Bereichen 27 abwechseln. Die kleine Grundfläche der kegelstumpfförmigen Bereiche 27 ist jeweils dem ersten Endabschnitt 15 zugewandt, so dass die zylindrischen Bereiche 25 entlang der Achse 14 teleskopisch ineinander geschachtelt sind. Unter Zugbeanspruchung klappen die kegelstumpfförmigen Bereichen 27 um, so dass die Hülse 11" sehr stark in ihrer Längsrichtung dehnbar ist, allerdings im Allgemeinen nach dem Umklappen eines Bereichs 27 nicht mehr elastisch in die Konfiguration der Fig. 5 zurückkehrt.

Auch die Hülse 11" ist, da frei von Hinterschneidungen, einfach und günstig zu fertigen; außerdem kann sie sich einem Bogen 7 der Kältemittelleitung 5 gut anpassen, indem wenigstens einer der kegelstumpfförmiger Bereich nur auf einem Teil seines Umfangs umklappt.

Im Mittelabschnitt 17‴ der Hülse 11‴ von Fig 6 wechseln sich ebenfalls zylindrische und kegelstumpfförmige Bereiche oder zum zweiten Endabschnitt 18 hin konvergierende Bereiche 28 und divergierende Bereiche 27 ab. Auch hier können die divergierenden Bereiche 27 unter Zugbeanspruchung umklappen in eine zum zweiten Endabschnitt 18 hin konvergierende Konfiguration. Die Ausdehnung der Bereiche 27, 28 in Richtung der Achse 14 ist im Wesentlichen gleich, was der Hülse 11‴ eine besonders kompakte Gestalt verleiht.

Die Hülse 11* der Fig. 7 hat einen Mittelabschnitt 17* von im Wesentlichen zylindrischer oder sich zum zweiten Endabschnitt 18 hin leicht konisch verjüngender Gestalt, von dem entlang der Achse 14 beabstandet ringförmig umlaufende Rippen 29 abstehen. Die Wandstärke des Mittelabschnitts 17* ist gering, um, wenn sich der Mittelabschnitt 17* passend zum Bogen 7 der Kältemittelleitung 5 krümmen muss, ein Nachgeben durch elastisches Dehnen des Mittelabschnitts 17* an der Außenseite des Bogens 7 und Zusammenfalten an seiner Innenseite zu erleichtern. Die Rippen 29 sind vorgesehen, um zu verhindern, dass der Mittelabschnitt 17* trotz seiner geringen Wandstärke beim Ausschäumen kollabiert und an die hindurch verlaufende Kältemittelleitung 5 angepresst wird.

Um dies sicherzustellen, kann die Wandstärke der Rippen 29 größer gewählt sein als die des Mittelabschnitts 17*.

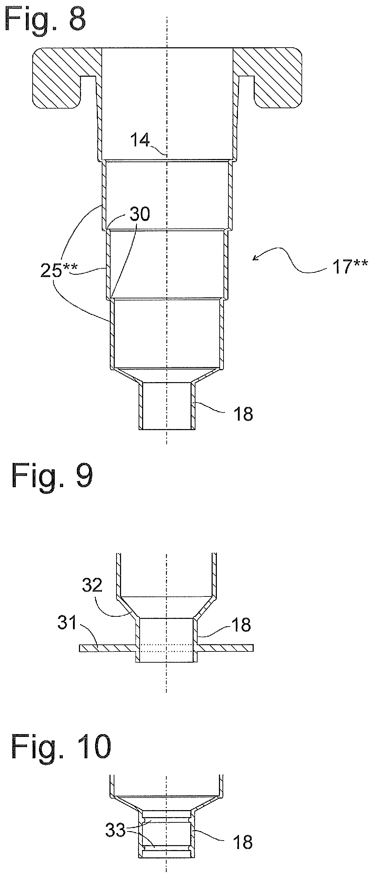

Fig. 8 zeigt eine Ausgestaltung der Hülse 11 **, bei der wieder der Mittelabschnitt 17** in zylindrische Bereiche 25** mit zum zweiten Endabschnitt 18 hin schrittweise abnehmendem Durchmesser gegliedert ist. Der Radiusunterschied zwischen benachbarten Bereichen 25** entspricht in etwa deren Wandstärke; Stufen 30 zwischen ihnen bilden jeweils Schwachstellen, die unter Druckbelastung in Richtung der Achse 14 zum Einknicken neigen. So biegt sich der Mittelabschnitt 17** an der Innenseite des in die Hülse 11** eingeschobenen Bogens 7 leporelloartig, während er an der Außenseite durch Zugspannung gedehnt sein kann.

Alle oben beschriebenen Ausgestaltungen der Hülse können an ihrem zweiten Endabschnitt 18 mit einem versteifenden umlaufenden Flansch 31 versehen sein, wie in Fig. 9 gezeigt. Indem dieser in den ausgehärteten Schaumstoff der Wärmedämmschicht 4 eingreift, stellt er sicher, dass in der Hülse bestehende Spannungen im Laufe des Gebrauchs des Geräts nicht dazu führen können, dass sich die Hülse vom Schaumstoff löst, verrutscht und Fugen entstehen, die Kältebrücken bilden oder das Vordringen von Feuchtigkeit in den Schaumstoff erleichtern könnten.

Wenn der zweite Endabschnitt 18 auf seiner gesamten Länge durch die eingeschobene Kältemittelleitung 5 gedehnt wird, so kann die resultierende Reibung das Einschieben der Kältemittelleitung 5 erheblich erschweren, ganz besonders im Falle der Fig. 9, wo der umlaufende Flansch 31 eine Aufweitung des Endabschnitts 18 erschwert. Um die beim Einschieben auftretende Reibung zu begrenzen, kann der zweite Endabschnitt 18 wie in Fig. 10 gezeigt, mit wenigstens einem Vorsprung 33 versehen sein, der von einer Innenseite des Endabschnitts absteht und, indem er die Kältemittelleitung 5 berührt, ihn umgebende Bereiche der Innenseite am Kontakt mit der Kältemittelleitung 5 hindert. Vorzugsweise erstreckt sich der Vorsprung 33 in Art einer Dichtlippe lückenlos über den gesamten Umfang der Innenfläche bzw. der Kältemittelleitung 5. Es können mehrere Vorsprünge 33 in axialer Richtung aufeinanderfolgend angeordnet sein.

### BEZUGSZEICHEN

| | | | |
|---|---|---|---|
| 1 | Kühlraum | 21 | Bereich mit kleinem Querschnitt |
| 2 | Verdampfer | 22 | Außenwand |
| 3 | Innenbehälter | 23 | Wulst |
| 4 | Wärmedämmschicht | 24 | Rohrstutzen |
| 5 | Kältemittelleitung | 25 | zylindrischer Bereich |
| 6 | Öffnung | 26 | ringförmige Wand |
| 7 | Bogen | 27 | kegelstumpfförmiger Bereich |
| 8 | Leitungsabschnitt | 28 | kegelstumpfförmiger Bereich |
| 9 | Wand | 29 | Rippe |
| 10 | Leitungsabschnitt | 30 | Stufe |
| 11 | Hülse | 31 | Flansch |
| 12 | Rohrstutzen | 32 | Übergang |
| 13 | Rinne | 33 | Vorsprung |
| 14 | Längsachse | | |
| 15 | erster Endabschnitt | | |
| 16 | Flansch | | |
| 17 | Mittelabschnitt | | |
| 18 | zweiter Endabschnitt | | |
| 19 | Nut | | |
| 20 | Bereich mit großem Querschnitt | | |

## Patentansprüche

1. Kältegerät, insbesondere Haushaltskältegerät, mit einem Kühlraum (1), einer Wärmedämmschicht (4) und einer sich zwischen dem Kühlraum (1) und der Wärmedämmschicht (4) erstreckenden Wand (9), einem mit der Wand (9) einteiligen, eine Öffnung (6) der Wand (9) umgebenden Rohrstutzen (12, 24) und einer sich durch den Rohrstutzen (12) erstreckenden Leitung (5), die auf einem Teil ihrer Länge in der Wärmedämmschicht (4) und auf einem anderen Teil in dem Kühlraum (1) verläuft, wobei eine elastische Hülse (11) an einem freien Ende des Rohrstutzens (12) fixierten ersten Endabschnitt (15) und einen an der Leitung (5) anliegenden zweiten Endabschnitt (18) aufweist, **dadurch gekennzeichnet, dass** die Hülse (11) einen gewellten Zwischenabschnitt (17) aufweist, in dem Bereiche mit großem Querschnitt (20) und Bereiche mit kleinem Querschnitt (21) miteinander abwechseln.

2. Kältegerät nach Anspruch 1, **dadurch gekennzeichnet, dass** die Hülse (11) an dem Rohrstutzen (12, 24) formschlüssig und/oder durch Klebung befestigt ist.

3. Kältegerät nach einem der vorhergehenden Ansprüche, **dadurch gekennzeichnet, dass** der erste Endabschnitt (15) durch den Rohrstutzen (12, 24) elastisch aufgeweitet ist.

4. Kältegerät nach einem der vorhergehenden Ansprüche, **dadurch gekennzeichnet, dass** von Rohrstutzen (12, 24) und erstem Endabschnitt (15) eines einen in radialer Richtung vorspringenden Wulst (23) und das andere eine den Wulst (23) aufnehmende Nut aufweist.

5. Kältegerät nach einem der vorhergehenden Ansprüche, **dadurch gekennzeichnet, dass** der Rohrstutzen (12) sich an einer von der Wärmedämmschicht abgewandten Seite der Wand (9) erstreckt und der erste Endabschnitt (15) eine Nut (19) aufweist, die wenigstens ein von der Wand (9) abgewandtes Ende des Rohrstutzens (12) aufnimmt.

6. Kältegerät nach Anspruch 5, **dadurch gekennzeichnet, dass** der Rohrstutzen am Boden einer in die Wärmedämmschicht (4) vorspringenden Vertiefung (13) der Wand (9) geformt ist.

7. Kältegerät nach einem der vorhergehenden Ansprüche, **dadurch gekennzeichnet, dass** der zweite Endabschnitt (18) der Hülse (11) durch die Leitung (5) elastisch aufgeweitet ist.

8. Kältegerät nach einem der vorhergehenden Ansprüche, **dadurch gekennzeichnet, dass** der zweite Endabschnitt (18) einen in Längsrichtung der Hülse (11) gleichbleibenden Durchmesser aufweist.

9. Kältegerät nach einem der vorhergehenden Ansprüche, **dadurch gekennzeichnet, dass** der zweite Endabschnitt (18) einen Rohrabschnitt und wenigstens einen von einer Innenfläche des Rohrabschnitts abstehenden Vorsprung umfasst.

10. Kältegerät nach einem der vorhergehenden Ansprüche, **dadurch gekennzeichnet, dass** die Bereiche mit kleinem Querschnitt (21) einen Innendurchmesser haben, der größer ist als der Außendurchmesser der Leitung (5).

11. Kältegerät nach einem der vorhergehenden Ansprüche, **dadurch gekennzeichnet, dass** in einem Zwischenabschnitt (17) der Hülse Bereiche (20, 21) mit zum zweiten Endabschnitt (18) hin stufenweise abnehmenden Querschnitten gebildet sind.

12. Anspruch neu nummeriert Kältegerät nach einem der vorhergehenden Ansprüche, **dadurch gekennzeichnet, dass** eine Längsachse (14) des ersten Endabschnitts (15) und eine Längsachse (14) des zweiten Endabschnitts (18) um wenigstens 45° voneinander abweichende Richtungen aufweisen.

13. Anspruch neu nummeriert Kältegerät nach einem der vorhergehenden Ansprüche, **dadurch gekennzeichnet, dass** die Leitung (5) eine Kältemittelleitung ist.

## Claims

1. Refrigeration appliance, in particular household refrigeration appliance, having a refrigeration chamber (1), a thermal insulation layer (4) and a wall (9) extending between the refrigeration chamber (1) and the thermal insulation layer (4), a pipe support (12, 24) which is integral with the wall (9) and surrounds an opening (6) of the wall (9) and a line (5) which extends through the pipe support (12) and runs with part of its length in the thermal insulation layer (4) and with another part in the refrigeration chamber (1), wherein an elastic sleeve (11) has a first end section (15) fixed to a free end of the pipe support (12) and a second end section (18) abutting the line (5), **characterised in that** the sleeve (11) has a wavy intermediate section (17), in which regions with a large cross-section (20) and regions with a small cross-section (21) alternate with one another.

2. Refrigeration appliance according to claim 1, **characterised in that** the sleeve (11) is fastened to the pipe support (12, 24) in a form-fit manner and/or by means of adhesion.

3. Refrigeration appliance according to one of the preceding claims, **characterised in that** the first end section (15) is elastically expanded by the pipe support (12, 24).

4. Refrigeration appliance according to one of the preceding claims, **characterised in that** of the pipe support (12, 24) and first end section (15), one has a bulge (23) protruding in the radial direction and the other has a notch receiving the bulge (23).

5. Refrigeration appliance according to one of the preceding claims, **characterised in that** the pipe support (12) extends on a side of the wall (9) which faces away from the thermal insulation layer and the first end section (15) has a notch (19) which receives at least one end of the pipe support (12) which faces away from the wall (9).

6. Refrigeration appliance according to claim 5, **characterised in that** the pipe support is formed on the base of a depression (13) of the wall (9) projecting into the thermal insulation layer (4).

7. Refrigeration appliance according to one of the preceding claims, **characterised in that** the second end section (18) of the sleeve (11) is elastically expanded through the line (5).

8. Refrigeration appliance according to one of the preceding claims, **characterised in that** the second end section (18) has a diameter which is constant in the longitudinal direction of the sleeve (11).

9. Refrigeration appliance according to one of the preceding claims, **characterised in that** the second end section (18) comprises a pipe section and at least one projection which projects from an inner surface of the pipe section.

10. Refrigeration appliance according to one of the preceding claims, **characterised in that** the regions with a small cross-section (21) have an inner diameter which is larger than the outer diameter of the line (5).

11. Refrigeration appliance according to one of the preceding claims, **characterised in that** in an intermediate section (17) of the sleeve, regions (20, 21) with cross-sections which reduce gradually toward the second end section (18) are formed.

12. Refrigeration appliance according to one of the preceding claims, **characterised in that** a longitudinal axis (14) of the first end section (15) and a longitudinal axis (14) of the second end section (18) have alignments which deviate from one another by at least 45°.

13. Refrigeration appliance according to one of the preceding claims, **characterised in that** the line (5) is a refrigerant line.

## Revendications

1. Appareil de réfrigération, en particulier appareil de réfrigération ménager, avec un compartiment réfrigérant (1), une couche d'isolation thermique (4) et une paroi (9) s'étendant entre le compartiment réfrigérant (1) et la couche d'isolation thermique (4), un embout tubulaire (12, 24), d'un seul tenant avec la paroi (9), entourant une ouverture (6) de la paroi (9), et une conduite (5) s'étendant à travers l'embout tubulaire (12), laquelle s'étend sur une partie de sa longueur dans la couche d'isolation thermique (4) et sur une autre partie dans le compartiment réfrigérant (1), dans lequel un manchon élastique (11) comprend une première section terminale (15) fixée à une extrémité libre de l'embout tubulaire (12) et une deuxième section terminale (18) adjacente à la conduite (5), **caractérisé en ce que** le manchon (11) comprend une section intermédiaire ondulée (17), dans laquelle alternent les unes avec les autres des zones avec une grande section transversale (20) et des zones avec une petite section transversale (21).

2. Appareil de réfrigération selon la revendication 1, **caractérisé en ce que** le manchon (11) est fixé à l'embout tubulaire (12, 24) par complémentarité de forme et/ou par collage.

3. Appareil de réfrigération selon l'une des revendications précédentes, **caractérisé en ce que** la première section terminale (15) est élargie élastiquement par l'embout tubulaire (12, 24).

4. Appareil de réfrigération selon l'une des revendications précédentes, **caractérisé en ce qu'**un élément parmi l'embout tubulaire (12, 24) et la première section terminale (15) comprend un bourrelet (23) faisant saillie en direction radiale et l'autre élément comprend une rainure recevant le bourrelet (23).

5. Appareil de réfrigération selon l'une des revendications précédentes, **caractérisé en ce que** l'embout tubulaire (12) s'étend sur une face de la paroi (9) opposée à la couche d'isolation thermique et la première section terminale (15) comprend une rainure (19), laquelle reçoit au moins une extrémité de l'embout tubulaire (12) opposée à la paroi (9).

6. Appareil de réfrigération selon la revendication 5, **caractérisé en ce que** l'embout tubulaire est façonné sur le fond d'un renfoncement (13) de la paroi (9) faisant saillie dans la couche d'isolation thermique (4).

7. Appareil de réfrigération selon l'une des revendications précédentes, **caractérisé en ce que** la deuxième section terminale (18) du manchon (11) est élargie élastiquement par la conduite (5).

8. Appareil de réfrigération selon l'une des revendications précédentes, **caractérisé en ce que** la deuxième section terminale (18) présente un diamètre constant dans la direction longitudinale du manchon (11).

9. Appareil de réfrigération selon l'une des revendications précédentes, **caractérisé en ce que** la deuxième section terminale (18) comporte une section tubulaire et au moins une saillie dépassant d'une surface interne de la section tubulaire.

10. Appareil de réfrigération selon l'une des revendications précédentes, **caractérisé en ce que** les zones avec une petite section transversale (21) ont un diamètre interne qui est supérieur au diamètre externe de la conduite (5).

11. Appareil de réfrigération selon l'une des revendications précédentes, **caractérisé en ce que**, dans une section intermédiaire (17) du manchon, sont formées des zones (20, 21) avec des sections transversales décroissant progressivement jusqu'à la deuxième section terminale (18).

12. Appareil de réfrigération selon l'une des revendications précédentes, **caractérisé en ce qu'**un axe longitudinal (14) de la première section terminale (15) et un axe longitudinal (14) de la deuxième section terminale (18) présentent des directions divergeant l'une de l'autre d'au moins 45°.

13. Appareil de réfrigération selon l'une des revendications précédentes, **caractérisé en ce que** la conduite (5) est une conduite de réfrigérant.
